# EUROPÄISCHE PATENTSCHRIFT

(11) **EP 3 022 277 B1**
(45) Veröffentlichungstag und Bekanntmachung des Hinweises auf die Patenterteilung: **04.04.2018**
(21) Anmeldenummer: 14758280.3
(22) Anmeldetag: 16.07.2014
(51) Int. Cl.: F23G 5/00, F23G 7/10, C10J 3/60

(54) **VERFAHREN ZUR NUTZUNG VON BIOMASSE ZUR ERZEUGUNG VON ELEKTRISCHER ENERGIE UND WÄRMEBEREITSTELLUNG DURCH PYROLYSE; VERGASUNG UND VERBRENNUNG UND ZUR UMWANDLUNG VON WÄRMEENERGIE IN ELEKTRISCHE ENERGIE**
METHOD OF USE OF BIOMASS FOR GENERATING ELECTRIC ENERGY AND HEAT SUPPLY BY PYROLYSIS; GASIFICATION AND COMBUSTION AND FOR CONVERTING THERMAL ENERGY INTO ELECTRICAL ENERGY
MODE D'EMPLOI DE LA BIOMASSE POUR LA PRODUCTION D'ENERGIE ELECTRIQUE ET CHAUFFAGE ALIMENTATION PAR PYROLYSE; GAZÉIFICATION ET COMBUSTION ET DE CONVERSION ENERGIE THERMIQUE EN ENERGIE ELECTRIQUE

(30) Priorität: 16.07.2013 DE 102013107556
(43) Veröffentlichungstag der Anmeldung: 25.05.2016
(73) Patentinhaber: Nagel, Torsten, 02979 Spreetal (DE)
(72) Erfinder: Nagel, Torsten, 02979 Spreetal (DE)
(74) Vertreter: Kailuweit & Uhlemann Patentanwälte Partnerschaft mbB
(86) Internationale Anmeldenummer: PCT/DE2014/100261
(87) Internationale Veröffentlichungsnummer: WO 2015/007273

(56) Entgegenhaltungen:
- WO-A2-2008/055591
- DE-A1-102011 011 807
- US-A1- 2011 227 339
- Paper 62 ET AL: "Evaluation and Examples of Biomass Utilization Concepts", , 18. Mai 2009 (2009-05-18), XP055146975, Gefunden im Internet: URL:http://tu-dresden.de/die_tu_dresden/fa kultaeten/fakultaet_maschinenwesen/iet/vws /Veroeffentlichungen/Beckmann_90-07/Be-129 .pdf [gefunden am 2014-10-16]

## Beschreibung

Aus dem Stand der Technik ergeben sich folgende Lösungen:
Biomasse, wie zum Beispiel Ersatzbrennstoffe mit biogenem Anteil, Klärschlamm, Gärreste, ist mengenmäßig eine der bedeutendsten regenerativen Energiequellen und zeichnet sich durch ihre Speicherbarkeit und planbare Verfügbarkeit aus. Derzeit besitzt der Energieträger Biomasse ein hohes, zu Teilen noch ungenutztes Potential.

Biomasse fällt in der Fläche verteilt, am Ernteort oder als zum Beispiel landwirtschaftlicher Abfall an.

Außerdem besitzt sie einen relativ geringen Heizwert und in der Regel eine geringe Energiedichte.

Dadurch ist ein Transport bezogen auf die Energieeinheit sowohl energetisch als auch ökonomisch aufwendig. Für die energetische Nutzung von Biomasse bieten sich daher vor allem kleinere, dezentrale Anlagen zur unmittelbaren Energieumwandlung in Nutzenergie und gegebenenfalls auch zur Brennstoffvorbehandlung an.

Die Biomasse wird durch chemische, biochemische oder physikalische Prozesse in thermische Energie, elektrische Energie oder chemische Energie in flüssigen und gasförmigen Sekundär-Bioenergieträgern umgewandelt.

Im Zusammenhang mit dem hier vorgeschlagenen neuen Verfahren zur Umwandlung von Biomasseenergie in elektrische und thermische Energie sind Pyrolyse, Vergasungs- und Verbrennungsverfahren zu betrachten. Diese können nacheinander, räumlich getrennt oder auch in Reaktoren gemeinsam, überlappend ausgeführt werden.

Grundsätzlich sind zwei Verfahrenskonzepte zur Umwandlung der Biomasse zunächst in mechanische Energie zu unterscheiden:
1. Umwandlung in thermische Energie durch Verbrennung und nachfolgender Kreisprozess, zum Beispiel Wasserdampfkraftprozess, ORC-Prozess;
   Dabei werden Pyrolyse, Vergasung, Verbrennung als zusammenfassende Prozesse verstanden, welche sich selbstverständlich aus Teilprozessen - auch in mehreren Einheiten - zusammensetzen können.
2. Umwandlung in chemische Energie durch Pyrolyse und/oder Vergasung und nachfolgender Kreisprozess, zum Beispiel Gas-Motor, Gas-Turbine.

Die Umwandlung mechanischer Energie unter Nutzung des Generatorprinzips in elektrische Energie ist ein bekanntes, hocheffizientes Verfahren, auf das hier nicht näher eingegangen wird.

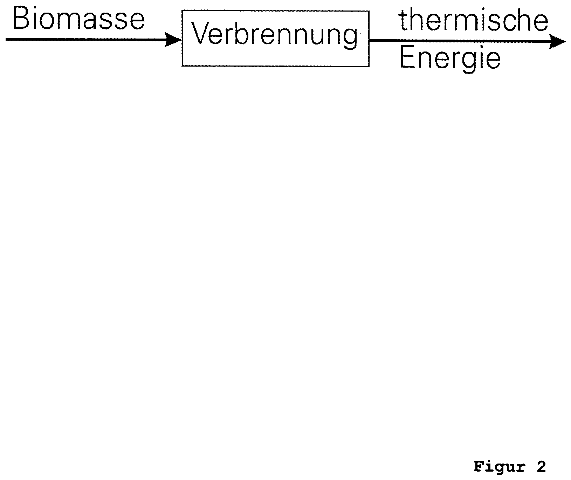

Seit langem zum Stand der Technik zu zählen sind Verbrennungsverfahren, in denen die chemische Energie der Biomasse zunächst in thermische Energie - Rauchgasenthalpie - umgewandelt wird. Dieser Prozess ist in der Figur 2 schematisch dargestellt.

An die Verbrennung schließt sich eine Dampferzeugung oder nur eine Wärmeübertragung auf ein Trägermedium wie Wasser oder Luft an. Bei der Umwandlung in thermische Energie lassen sich in der Regel hohe Wirkungsgrade (ca. 90 %) erreichen.

Niedrige Luftüberschusszahlen werden angestrebt, um möglichst geringe Abgasverluste und damit möglichst hohe Kesselwirkungsgrade zu erzielen.

Die Figur 2 zeigt den prinzipiellen Ablauf der ungekoppelten Erzeugung thermischer Energie.

Es existieren eine Reihe technischer Möglichkeiten der Erzeugung elektrischer Energie aus thermischer Energie in Verbindung mit einem Verbrennungsprozess. Während für die Nutzung fester fossiler Brennstoffe in Großanlagen Wasserdampfkraftprozesse mit Dampfturbinen absolut dominieren, konkurrieren für die kleineren Anlagen, wie sie für die Biomassenutzung erforderlich sind, verschiedene Verfahren. Dies liegt vor allem darin begründet, dass die Wasserdampfkraftprozesse mit Dampfturbinen in kleineren Leistungsgrößen mit schlechten Wirkungsgraden behaftet sind.

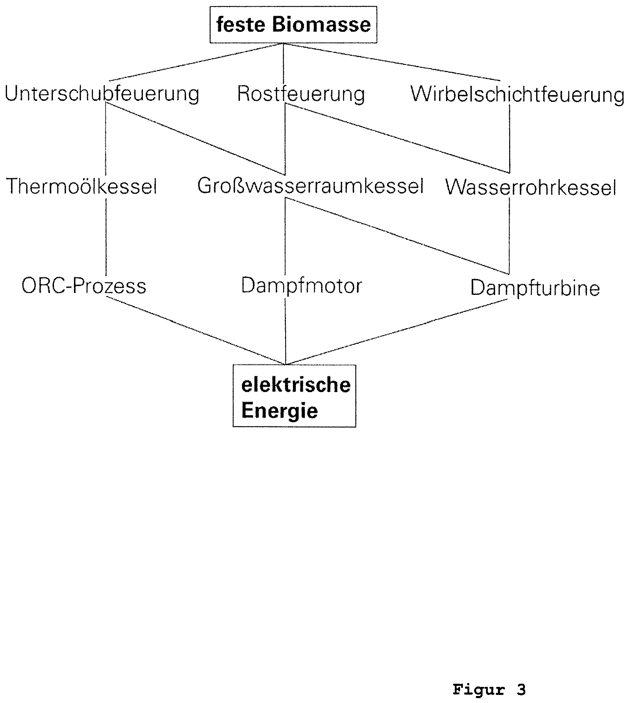

Die prinzipiellen Möglichkeiten der Umwandlung der Biomasse in elektrische Energie über thermische Energie (erstes Verfahrenskonzept) sind beispielhaft in der Figur 3 dargestellt (entnommen aus Beckmann, M.; Rostkowski, S.; Scholz, R.: Energieeffizienz der energetischen Biomassenutzung. In: Thomé-Kozmiensky, K. J.; Beckmann, M. (Hrsg.): Erneuerbare Energien - Band 2. Neuruppin: TK Verlag Karl Thomé-Kozmiensky, 2009, S. 265-281. ISBN 978-3-935317-43-6 und Beckmann, M.; Klemm, M.: Strategien der energetischen Biomassenutzung. In: Thomé-Kozmiensky, K. J.; Beckmann, M. (Hrsg.): Energie aus Abfall - Band 5. Neuruppin: TK Verlag Karl Thomé-Kozmiensky, 2008, S. 51-72. ISBN 978-3-935317-34-4).

Dabei sind Apparate und Prozesse zur Erzeugung elektrischer Energie über thermische Energie beschrieben.

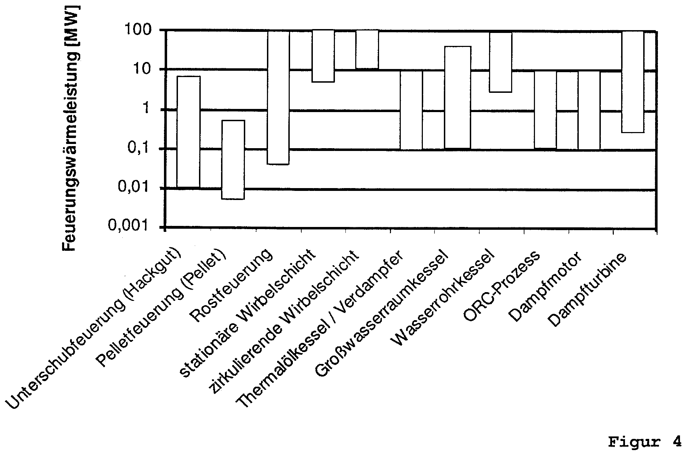

Die Auswahl geeigneter Prozessschritte und zugehöriger Apparate ist dabei vor allem von der installierten Leistung abhängig. Die Figur 4 (entnommen aus Beckmann, M.; Rostkowski, S.; Scholz, R.: Energieeffizienz der energetischen Biomassenutzung. In: Thomé-Kozmiensky, K. J.; Beckmann, M. (Hrsg.): Erneuerbare Energien - Band 2. Neuruppin: TK Verlag Karl Thomé-Kozmiensky, 2009, S. 265-281. ISBN 978-3-935317-43-6 und Beckmann, M.; Klemm, M.: Strategien der energetischen Biomassenutzung. In: Thomé-Kozmiensky, K. J.; Beckmann, M. (Hrsg.): Energie aus Abfall - Band 5. Neuruppin: TK Verlag Karl Thomé-Kozmiensky, 2008, S. 51-72. ISBN 978-3-935317-34-4) zeigt hierzu eine Übersicht. Es sind Apparate und Prozesse der Biomasseumwandlung in elektrische Energie über thermische Energie mit zugehörigen Leistungsbereichen dargelegt.

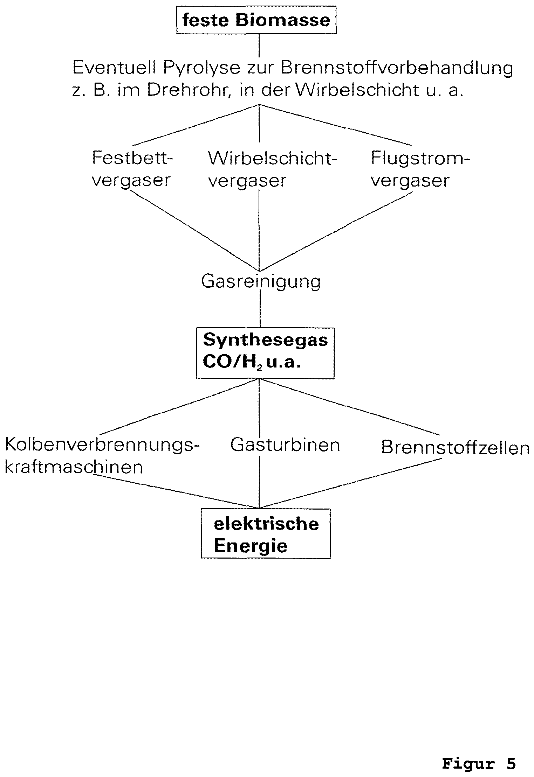

Für das zweite oben genannte Verfahrenskonzept - der Umwandlung der Biomasse über chemische Energie in elektrische Energie - sind prinzipielle Möglichkeiten in der Figur 5 (entnommen aus Beckmann, M.; Rostkowski, S.; Scholz, R.: Energieeffizienz der energetischen Biomassenutzung. In: Thomé-Kozmiensky, K. J.; Beckmann, M. (Hrsg.): Erneuerbare Energien - Band 2. Neuruppin: TK Verlag Karl Thomé-Kozmiensky, 2009, S. 265-281. ISBN 978-3-935317-43-6 und Beckmann, M.; Klemm, M.: Strategien der energetischen Biomassenutzung. In: Thomé-Kozmiensky, K. J.; Beckmann, M. (Hrsg.): Energie aus Abfall - Band 5. Neuruppin: TK Verlag Karl Thom-Kozmiensky, 2008, S. 51-72. ISBN 978-3-935317-34-4) dargestellt. Dabei ist die Erzeugung elektrischer Energie über chemische Energie aufgezeigt.

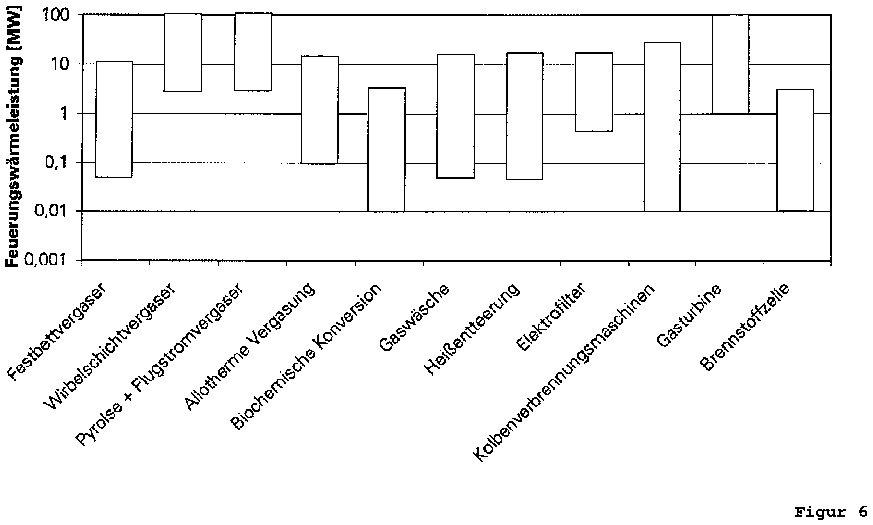

Die Auswahl geeigneter Prozessschritte und zugehöriger Apparate ist dabei ebenfalls - wie die Figur 6 (entnommen aus Beckmann, M.; Rostkowski, S.; Scholz, R.: Energieeffizienz der energetischen Biomassenutzung. In: Thom-Kozmiensky, K. J.; Beckmann, M. (Hrsg.): Erneuerbare Energien - Band 2. Neuruppin: TK Verlag Karl Thom-Kozmiensky, 2009, S. 265-281. ISBN 978-3-935317-43-6 und Beckmann, M.; Klemm, M.: Strategien der energetischen Biomassenutzung. In: Thom-Kozmiensky, K. J.; Beckmann, M. (Hrsg.): Energie aus Abfall - Band 5. Neuruppin: TK Verlag Karl Thom-Kozmiensky, 2008, S. 51-72. ISBN 978-3-935317-34-4) im Überblick zeigt - vor allem von der installierten Leistung abhängig. Es sind Apparate und Prozesse der Biomasseumwandlung in elektrische Energie über chemische Energie mit zugehörigen Leistungsbereichen aufgeführt.

In der DE 10 2011 011 807 A1 ist ein Verfahren zur Nutzung von Biomasse zur Erzeugung von elektrischer Energie und Wärmebereitstellung beschrieben, bei dem durch Pyrolyse, Vergasung und Verbrennung ein heißes Abgas erzeugt wird, das in einer Gasturbine, die einen Generator zur Erzeugung elektrischer Energie antreibt, vollständig entspannt wird. Das heiße Turbinenabgas wird weiterhin zur Erzeugung von Hochdruckdampf, der wiederum über eine Hochdruckdampfturbine einen Generator zur Erzeugung elektrischer Energie antreibt, genutzt.

Die Aufgabe der Erfindung ist es, ein Verfahren und ein System zur Nutzung von Biomasse zur Erzeugung von elektrischer Energie und Wärmebereitstellung durch Pyrolyse, Vergasung und Verbrennung zu finden, womit ein erheblich hoher Wirkungsgrad erreicht wird.

Erfindungsgemäß wird die Aufgabe durch ein Verfahren nach Anspruch 1 und ein System nach Anspruch 4 gelöst.

Dabei wurde ein Verfahren zur Nutzung von Biomasse zur Erzeugung von elektrischer Energie und Wärmebereitstellung durch Pyrolyse, Vergasung und Verbrennung entwickelt, wobei eine Verbrennung eines gasförmigen, flüssigen und/oder festen Biomasse unter Druck in einer ersten Einheit mit Reaktionsgas durchgeführt wird und durch weitere Zumischung von Reaktionsgas auf gleichem Druckniveau zur kontrollierten Herabsetzung der Abgastemperatur und Verringerung der Konzentration korrosiver Abgasbestandteile in einer zweiten Einheit ausgeführt wird und mit nachfolgender Nutzung der Abgasenthalpie zunächst in einer dritten Einheit durch Entspannung in einem System aus thermischen Arbeitsmaschinen, bestehend aus einer ersten Entspannungsstufe zur gleichzeitigen Verdichtung des Reaktionsgases und der Zumischung und weiterhin aus einer zweiten Entspannungsstufe mit weiterer Umwandlung der mechanischen Energie die über eine Viscokupplung an einen Generator übertragen wird, der dann elektrische Energie erzeugt, und eine weitere Nutzung der Abgasenthalpie in einer vierten Einheit zur Vorwärmung des verdichteten Reaktionsgases und der Zumischung aus dem System der thermischen Arbeitsmaschinen erfolgt sowie zur weiteren Verwendung der Abgasenergie zur externen Wärmenutzung angewandt wird.
Nachfolgend wird die Erfindung beschrieben.
Es zeigen:

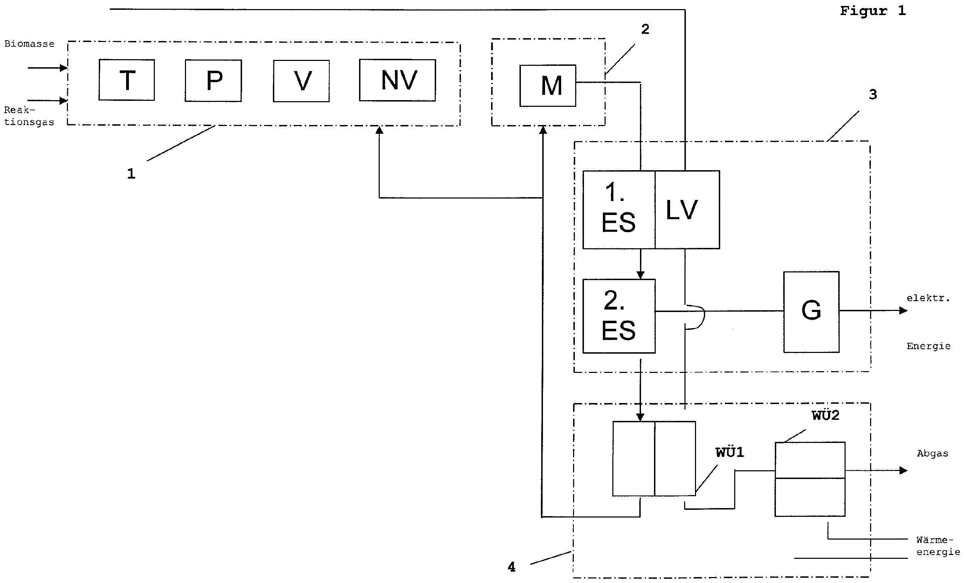

- Figur 1: Blockschaltbild des Verfahrens
- Figur 2: prinzipieller Ablauf der ungekoppelten Erzeugung thermischer Energie
- Figur 3: Apparate und Prozesse zur Erzeugung elektrischer Energie über thermische Energie
- Figur 4: Apparate und Prozesse der Biomasseumwandlung in elektrische Energie über thermische Energie mit zugehörigen Leistungsbereichen
- Figur 5: Erzeugung elektrischer Energie über chemische Energie
- Figur 6: Apparate und Prozesse der Biomasseumwandlung in elektrische Energie über chemische Energie mit zugehörigen Leistungsbereichen.

Das hier beschriebene Verfahren baut auf bekannten Grundbausteinen der Pyrolyse, Vergasung und Verbrennung sowie der Wärmeübertragung und einem System einer mechanischen Arbeitsmaschine, wie einem Turbocompoundsystem, auf, unterscheidet sich jedoch deutlich von den bisher bekannten oben beschriebenen Verfahrenskonzepten.

Zunächst erfolgt in einer ersten Einheit 1 eine Verbrennung der gasförmigen, flüssigen oder festen Biomasse unter Prozessdruck. Die erste Einheit 1 enthält naturgemäß verschiedene Teilstufen der Trocknung T, Pyrolyse P, Vergasung V, Nachverbrennung NV, die auch räumlich getrennt in verschiedenen Apparaten und/oder Reaktoren ablaufen können. Reaktionsgase für die Pyrolyse P, Vergasung V, Nachverbrennung NV können Wasserdampf, Kohlenstoffdioxid, Stickstoff, Luft, Sauerstoff oder Mischungen aus den genannten Gaskomponenten sein. Das Reaktionsgas wird auf dem Druckniveau des Prozessdruckes zugeführt.

Gleich nach der Nachverbrennung NV wird in einer zweiten Einheit 2 als Mischstelle unter Berücksichtigung der Primärmaßnahmen zur NOₓ-Minderung bei gleichzeitig hohem Ausbrand weiteres Reaktionsgas, weitere Luft auf dem Niveau des Prozessdruckes zugemischt, so dass ein sehr hohes Stöchometrieverhältnis, Luftüberschussverhältnis entsteht. Diese Zumischung hat zum einen die Aufgabe, den Partialdruck korrosiver Bestandteile so abzusenken, dass in den nachfolgenden Einheiten das Korrosionsrisiko erheblich reduziert wird, und zum zweiten die Eintrittstemperatur für die dritte Einheit 3 einzustellen.

Die nachfolgende dritte Einheit 3 besteht aus einem System thermischer Arbeitsmaschinen, vorzugsweise aus einem Turbocompoundsystem, in dem in einer ersten Entspannungsstufe ES1 das Abgas aus der Einheit 2 teilentspannt wird, um Reaktionsgas, Luft auf das Prozessdruckniveau zu verdichten. In einer zweiten Entspannungsstufe ES2 erfolgt die weitere Umwandlung der Abgasenthalpie in mechanische Energie, die über eine Viscokupplung an einen Generator G übertragen wird, der dann elektrische Energie erzeugt.

Der Abgasstrom aus der zweiten Entspannungsstufe ES2 der dritten Einheit 3 wird dann weiter in einer vierten Einheit 4 als Wärmeverschiebesystem zur Vorwärmung des in der dritten Einheit 3 in der ersten Entspannungsstufe ES1 verdichteten Reaktionsgases, der Luft auf ein möglichst hohes Temperaturniveau gebracht. Dabei ist ein interner Wärmeübertrager WÜ1 sowie zur Bereitstellung von Wärme ein externer Wärmeübertrager WÜ2 gekoppelt.

Nachfolgend werden einzelne Verfahrensweisen in den anschließenden Punkten beschrieben.
1. die Verbrennung eines gasförmigen, flüssigen oder festen Brennstoffes unter Druck in einer ersten Einheit 1 mit Luft und
2. weiterer Zumischung von Luft auf gleichem Druckniveau zur kontrollierten Herabsetzung der Abgastemperatur und Verringerung der Konzentration korrosiver Abgasbestandteile in einer zweiten Einheit 2
3. mit nachfolgender Nutzung der Abgasenthalpie zunächst in einer dritten Einheit 3
   a. durch Entspannung in einem System aus thermischen Arbeitsmaschinen, vorzugsweise einem Turbocompoundsystem, bestehend aus
      i. einer ersten Entspannungsstufe ES1 in einem Turbolader zur gleichzeitigen Verdichtung LV des Reaktionsgases und der Zumischung und
      ii. einer zweiten Entspannungsstufe ES2 mit weiterer Umwandlung der mechanischen Energie, durch Übertragung der mechanischen Energie an einen Generator G und Umwandlung in elektrische Energie;
   und
4. weiterer Nutzung der Abgasenthalpie in einer vierten Einheit 4
   a. zur Vorwärmung des verdichteten Reaktionsgases, Luft hin zur Einheit 1 und der Zumischung in der Einheit 2 aus der ersten Eingangsstufe einer internen Abgaswärmerückgewinnung, wie dem Turbolader, über den Wärmeübertrager WÜ1
   b. sowie zur weiteren Verwendung der Abgasenergie zur Wärmenutzung über den externen Wärmeübertrager WÜ2.
   b1 Alternativ kann die Wärmeenergie, Abgasenthalpie auch in einem entsprechenden Wärmespeicher gespeichert werden und bei Bedarf zur teilweisen oder vollständigen Aufheizung des Arbeitsfluids, dass der Entspannungsstufe ES1 zugeführt wird, vorzugsweise über ein Turbocompoundsystem, genutzt werden.
   b2 Alternativ kann das erzeugte Synthesegas oder ein anderweitig erzeugtes Brenngas, zugemischt mit üblichen Brenngasen, wie Propan, Butan, Erdgas und dergleichen, in einem Gasspeicher gespeichert werden und bei Bedarf zur teilweisen oder vollständigen Aufheizung des Arbeitsfluids, dass der Entspannungsstufe ES1 zugeführt wird, vorzugsweise über ein Turbocompoundsystem, genutzt werden.

Als Brennstoffe können neben konventionellen Brenngasen wie Erdgas auch andere synthetische Brenngase wie zum Beispiel Biogas, durch katalytische, thermische oder elektrolytische Spaltung erzeugte Brenngase, Pyrolysegase, Vergasungsgase usw. eingesetzt werden. Als flüssige Brennstoffe kommen Pflanzenöl, Altöl usw. zum Einsatz. Als feste Brennstoffe können Biomasse, landwirtschaftliche Abfälle, Klärschlamm, biomassehaltige Ersatzbrennstoffe, Gärreste und Rückstände usw. zum Einsatz kommen. Darüber hinaus können auch Schlämme und pastöse Stoffe zugemischt werden.

Die Verbrennung in der Einheit 1 kann insbesondere bei festen Brennstoffen in mehreren Schritten getrennt erfolgen. Dabei kann der erste Prozessschritt als Vergasung V - zum Beispiel in einem Wirbelschicht-, einem Schacht- oder einem Flugstromreaktor - erfolgen. Als Vergasungsmittel wird dabei ein Teil des verdichteten Reaktionsgases, Luft aus der ersten Eingangsstufe der Einheit 3 des Turboladers verwendet; gegebenenfalls kann auch Wasser, Wasserdampf oder Kohlenstoffdioxid zur Einstellung des Vergasungsgases gezielt zugeführt werden.

### Bezugszeichen

- 1: Einheit
- 2: Einheit
- 3: Einheit
- 4: Einheit
- T: Trocknung
- P: Pyrolyse
- V: Vergasung
- NV: Nachverbrennung
- M: Mischstelle
- LV: Verdichtung
- G: Generator
- WÜ1: Wärmeübertrager 1 (intern)
- WÜ2: Wärmeübertrager 2 (extern)
- ES1: Entspannungsstufe
- ES2: Entspannungsstufe

## Patentansprüche

1. Verfahren zur Nutzung von Biomasse zur Erzeugung von elektrischer Energie und Wärmebereitstellung durch Pyrolyse, Vergasung und Verbrennung, wobei eine Verbrennung einer gasförmigen, flüssigen und/oder festen Biomasse unter Prozessdruck in einer ersten Einheit (1) mit Reaktionsgas durchgeführt wird,
**dadurch gekennzeichnet, dass**
- in einer zweiten Einheit (2) eine Zumischung von Reaktionsgas auf gleichem Druckniveau wie dem Prozessdruck zur kontrollierten Herabsetzung der Abgastemperatur und Verringerung der Konzentration korrosiver Abgasbestandteile ausgeführt wird,
- nachfolgend in einer dritten Einheit (3) unter Nutzung der Abgasenthalpie durch Entspannung in einem System aus thermischen Arbeitsmaschinen in einer ersten Entspannungsstufe (ES1) das Abgas aus der zweiten Einheit (2) teilentspannt wird, um Reaktionsgas auf das Prozessdruckniveau zu verdichten, und in einer zweiten Entspannungsstufe (ES2) das Abgas aus der ersten Entspannungsstufe (ES1) weiter entspannt wird und eine weitere Umwandlung der Abgasenthalpie in mechanische Energie erfolgt, die über eine Viscokupplung an einen Generator (G) übertragen wird, der dann elektrische Energie erzeugt, und
- in einer vierten Einheit (4) eine weitere Nutzung der Abgasenthalpie zur Vorwärmung des verdichteten Reaktionsgases aus dem System der thermischen Arbeitsmaschinen sowie zur externen Wärmenutzung erfolgt.

2. Verfahren nach Anspruch 1, **dadurch gekennzeichnet, dass** als System aus thermischen Arbeitsmaschinen ein Turbocompoundsystem genutzt wird.

3. Verfahren nach Anspruch 2, **dadurch gekennzeichnet, dass** jeweils ein Verdichtungsverhältnis unterhalb 1:8 in dem Turbocompoundsystem ausgeführt wird.

4. System zur Nutzung von Biomasse zur Erzeugung von elektrischer Energie und Wärmebereitstellung, mit einer ersten Einheit (1), die zur Durchführung einer Pyrolyse, Vergasung und Verbrennung der Biomasse geeignet ist, wobei die Verbrennung einer gasförmigen, flüssigen und/oder festen Biomasse unter Prozessdruck mit Reaktionsgas durchgeführt wird,
**dadurch gekennzeichnet, dass** das System weiterhin enthält:
- eine zweite Einheit (2), die zur Zumischung von Reaktionsgas auf gleichem Druckniveau wie dem Prozessdruck zur kontrollierten Herabsetzung der Abgastemperatur und Verringerung der Konzentration korrosiver Abgasbestandteile geeignet ist,
- eine dritte Einheit (3), die zur Nutzung der Abgasenthalpie durch Entspannung geeignet ist und aus einem System aus thermischen Arbeitsmaschinen mit einer ersten Entspannungsstufe (ES1) und einer zweiten Entspannungsstufe (ES2) besteht, wobei die erste Entspannungsstufe (ES1) zur Teilentspannung des Abgases aus der zweiten Einheit (2) geeignet und mit einem Verdichter (LV) zum Verdichten von Reaktionsgas auf das Prozessdruckniveau gekoppelt ist und die zweite Entspannungsstufe (ES2) zur weiteren Entspannung des Abgases aus der ersten Entspannungsstufe (ES1) und zur weiteren Umwandlung der Abgasenthalpie in mechanische Energie geeignet und mit einem Generator (G) über eine Viscokupplung zur Umwandlung der mechanischen Energie in elektrische Energie gekoppelt ist, und
- eine vierte Einheit (4), die zur weiteren Nutzung der Abgasenthalpie zur Vorwärmung des verdichteten Reaktionsgases aus dem System der thermischen Arbeitsmaschinen sowie zur externen Wärmenutzung geeignet ist.

5. System nach Anspruch 4, **dadurch gekennzeichnet, dass** das System aus thermischen Arbeitsmaschinen in Form eines Turbocompoundsystems vorliegt.

6. System nach Anspruch 5, **dadurch gekennzeichnet, dass** das Turbocompoundsystem geeignet ist, jeweils ein Verdichtungsverhältnis unterhalb 1:8 auszuführen.

## Claims

1. Method of using biomass for generating electric energy and for providing thermal energy by pyrolysis, gasification and combustion, wherein a combustion of a gaseous, liquid and/or solid biomass is performed in a first unit (1) under process pressure with a reaction gas, **characterized in that**
- an admixture of a reaction gas at the same pressure level as the process pressure is performed in a second unit (2) in order to decrease the temperature of an exhaust gas and the concentration of corrosive components of the exhaust gas in a controlled way,
- subsequently, the enthalpy of the exhaust gas is used in a third unit (3) by expansion in a system of thermal machines, wherein the exhaust gas from the second unit (2) is partially expanded in a first expansion stage (ES1) in order to compress a reaction gas to the level of the process pressure, and the exhaust gas from the first expansion stage (ES1) is further expanded in a second expansion stage (ES2), wherein a further transformation of the enthalpy of the exhaust gas into mechanical energy takes place, which mechanical energy is transferred to a generator (G) via a viscous coupling unit, which generator then generates electric energy, and
- the enthalpy of the exhaust gas is further used in a fourth unit (4) for preheating of the compressed reaction gas from the system of thermal machines and for external use of the thermal energy.

2. The method according to claim 1, **characterized in that** a turbo-compound system is used as the system of thermal machines.

3. The method according to claim 2, **characterized in that** a compression ratio below 1:8 is performed in the turbo-compound system in each case.

4. System for using biomass for generating electric energy and for providing thermal energy, with a first unit (1) suitable for performing a pyrolysis, gasification and combustion of the biomass, wherein the combustion of a gaseous, liquid and/or solid biomass is performed under process pressure with a reaction gas,
**characterized in that** the system further comprises:
- a second unit (2) suitable for admixture of a reaction gas at the same pressure level as the process pressure in order to decrease the temperature of an exhaust gas and the concentration of corrosive components of the exhaust gas in a controlled way,
- a third unit (3) suitable for using the enthalpy of the exhaust gas by expansion and consisting of a system of thermal machines with a first expansion stage (ES1) and a second expansion stage (ES2), wherein the first expansion stage (ES1) is suited for partially expanding the exhaust gas from the second unit (2) and is coupled with a compressor (LV) for compressing a reaction gas to the level of the process pressure, and the second expansion stage (ES2) is suited for further expanding the exhaust gas from the first expansion stage (ES1) and for further transforming the enthalpy of the exhaust gas into mechanical energy and is coupled with a generator (G) via a viscous coupling unit for transforming the mechanical energy into electric energy, and
- a fourth unit (4) suitable for further using the enthalpy of the exhaust gas for preheating of the compressed reaction gas from the system of thermal machines and for external use of the thermal energy.

5. The system according to claim 4, **characterized in that** the system of thermal machines is provided in form of a turbo-compound system.

6. The system according to claim 5, **characterized in that** the turbo-compound system is suitable for performing a compression ratio below 1:8 in each case.

## Revendications

1. Procédé d'utilisation de la biomasse pour la production d'énergie électrique et l'alimentation en chaleur par pyrolyse, gazéification et combustion, dans lequel la combustion d'une biomasse à l'état gazeux, liquide et/ou solide est réalisée à une pression de procédé dans une première unité (1) avec du gaz de réaction,
**caractérisé en ce que**
- l'on réalise dans une deuxième unité (2) un mélange de gaz de réaction à la même pression que la pression de procédé pour réduire de façon contrôlée la température du gaz de combustion et diminuer la concentration de composants corrosifs dans le gaz de combustion,
- le gaz de combustion provenant de la deuxième unité (2) est ensuite partiellement détendu dans une troisième unité (3) en utilisant l'enthalpie du gaz de combustion par détente dans un système de machines de traitement thermique lors d'une première étape de détente (ES1), pour comprimer le gaz de réaction jusqu'à la pression de procédé, et le gaz de combustion provenant de la première étape de détente (ES1) est détendu une nouvelle fois lors d'une seconde étape de détente (ES2) et l'enthalpie du gaz de combustion est convertie une nouvelle fois en énergie mécanique, qui est transmise par couplage visqueux à un générateur (G), lequel produit ensuite de l'énergie électrique, et
- l'enthalpie du gaz de combustion est utilisée une nouvelle fois dans une quatrième unité (4) pour préchauffer le gaz de réaction comprimé provenant du système de machines de traitement thermique et pour utiliser la chaleur à l'extérieur.

2. Procédé selon la revendication 1, **caractérisé en ce qu'**un système turbo-mélangeur est utilisé comme système de machines de traitement thermique.

3. Procédé selon la revendication 2, **caractérisé en ce que**, dans chaque cas, un taux de compression inférieur à 1:8 est atteint dans le système turbo-mélangeur.

4. Système d'utilisation de la biomasse pour la production d'énergie électrique et l'alimentation en chaleur, comportant une première unité (1) conçue pour effectuer une pyrolyse, une gazéification et une combustion de la biomasse, dans lequel la combustion d'une biomasse à l'état gazeux, liquide et/ou solide est réalisée à une pression de procédé avec du gaz de réaction,
**caractérisé en ce que** le système comprend en outre :
- une deuxième unité (2) conçue pour effectuer un mélange du gaz de réaction à la même pression que la pression de procédé, afin de réduire de façon contrôlée la température du gaz de combustion et de diminuer la concentration de composants corrosifs dans le gaz de combustion,
- une troisième unité (3) conçue pour utiliser l'enthalpie du gaz de combustion par détente et consistant en un système de machines de traitement thermique prévoyant une première étape de détente (ES1) et une seconde étape de détente (ES2), dans lequel la première étape de détente (ES1) est conçue pour effectuer la détente partielle du gaz de combustion provenant de la deuxième unité (2) et couplée avec un compresseur (LV) afin de comprimer le gaz de réaction jusqu'à la pression de procédé, et la seconde étape de détente (ES2) est conçue pour effectuer une nouvelle détente du gaz de combustion provenant de la première étape de détente (ES1) et pour effectuer une nouvelle conversion de l'enthalpie du gaz de combustion en énergie mécanique, et est couplée par couplage visqueux à un générateur (G) afin de convertir l'énergie mécanique en énergie électrique, et
- une quatrième unité (4) conçue pour utiliser une nouvelle fois l'enthalpie du gaz de combustion afin de préchauffer le gaz de réaction comprimé provenant du système de machines de traitement thermique et d'utiliser la chaleur à l'extérieur.

5. Système selon la revendication 4, **caractérisé en ce que** le système de machines thermiques se présente sous la forme d'un système turbo-mélangeur.

6. Système selon la revendication 5, **caractérisé en ce que** le système turbo-mélangeur est conçu, dans chaque cas, pour atteindre un taux de compression inférieur à 1:8.
